(19) Europäisches Patentamt
European Patent Office
Office européen des brevets

(11) EP 1 824 889 B1

(12) EUROPÄISCHE PATENTSCHRIFT

(45) Veröffentlichungstag und Bekanntmachung des Hinweises auf die Patenterteilung:
**09.03.2016 Patentblatt 2016/10**

(21) Anmeldenummer: **05814594.7**

(22) Anmeldetag: **28.11.2005**

(51) Int Cl.:
***C08F 8/00*** *(2006.01)*

(86) Internationale Anmeldenummer:
**PCT/EP2005/012678**

(87) Internationale Veröffentlichungsnummer:
**WO 2006/058682 (08.06.2006 Gazette 2006/23)**

(54) **VERFAHREN ZUR NACHVERNETZUNG WASSERABSORBIERENDER POLYMERPARTIKEL**

METHOD FOR THE SECONDARY CROSS-LINKING OF WATER-ABSORBING POLYMER PARTICLES

PROCEDE DE POSTRETICULATION DE PARTICULES POLYMERES ABSORBANT L'EAU

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **30.11.2004 DE 102004057874**

(43) Veröffentlichungstag der Anmeldung:
**29.08.2007 Patentblatt 2007/35**

(73) Patentinhaber: **BASF SE**
**67056 Ludwigshafen (DE)**

(72) Erfinder:
- **RIEGEL, Ulrich**
  **66849 Landstuhl (DE)**
- **DANIEL, Thomas**
  **67165 Waldsee (DE)**
- **STUEVEN, Uwe**
  **65812 Bad Soden (DE)**
- **ELLIOTT, Mark**
  **67063 Ludwigshafen (DE)**

(56) Entgegenhaltungen:
**WO-A-2004/052949** **DE-A1- 19 630 131**
**US-A1- 2004 176 544**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 824 889 B1

## Beschreibung

Die vorliegende Erfindung betrifft ein Verfahren zur Nachvernetzung wasserabsorbierender Polymerpartikel, wobei die Nachvernetzung in Abwesenheit oxidierender Gase durchgeführt wird, die durch das Verfahren herstellbaren wasserabsorbierbaren Polymere sowie deren Verwendung in Hygieneartikeln und Verpackungsmaterialien.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Wasserabsorbierende Polymere sind insbesondere Polymere aus (co)polymerisierten hydrophilen Monomeren, Pfropf(co)polymere von einem oder mehreren hydrophilen Monomeren auf einer geeigneten Pfropfgrundlage, vernetzte Cellulose- oder Stärkeether, vernetzte Carboxymethylcellulose, teilweise vernetztes Polyalkylenoxid oder in wässrigen Flüssigkeiten quellbare Naturprodukte, wie beispielsweise Guarderivate. Solche Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet.

Zur Verbesserung der Anwendungseigenschaften, wie beispielsweise Flüssigkeitsleitfähigkeit (SFC) in der Windel und Absorption unter Druck (AUL), werden wasserabsorbierende Polymerpartikel im allgemeinen nachvernetzt. Diese Nachvernetzung kann in wässriger Gelphase durchgeführt werden. Vorzugsweise werden aber gemahlene und abgesiebte Polymerpartikel (Grundpolymer) an der Oberfläche mit einem Nachvernetzer beschichtet, getrocknet und thermisch nachvernetzt. Dazu geeignete Vernetzer sind Verbindungen, die mindestens zwei Gruppen enthalten, die mit den Carboxylatgruppen des hydrophilen Polymeren kovalente Bindungen bilden können oder die mindestens zwei Carboxylgruppen oder andere funktionelle Gruppen mindestens zweier verschiedener Polymerketten des Grundpolymers miteinander vernetzen können.

Die Nachvernetzung wird in der Monographie "Modern Superabsorbent Polymer Technology", F.L. Buchholz und A.T. Graham, Wiley-VCH, 1998, Seiten 97 bis 103, beschrieben. Üblicherweise werden die wasserabsorbierenden Polymerpartikel mit dem Nachvernetzer benetzt und thermisch nachvernetzt, wobei die Polymerpartikel mittels heißer Luft oder mittels Kontakttrocknung erwärmt und gleichzeitig getrocknet werden. Der Zusatz von Oxidationsmitteln bei der Nachvernetzung führt zu wasserabsorbierenden Polymerpartikeln mit weiter verbesserten Eigenschaften.

Für ultradünne Hygieneartikel werden wasserabsorbierende Polymerpartikel mit einem hohen Weißegrad benötigt. Bei ultradünnen Windeln sind bereits geringe Farbvariationen durch die dünne Deckschicht zu erkennen, die von den Kunden nicht akzeptiert werden. Aber auch die Verwendung von Superabsorbern in dickeren Hygieneartikeln erfordert oftmals aus Akzeptanzgründen beim Kunden ein möglichst weißes Produkt, da Vergilbung oftmals als schmutzig oder minderwertig assoziiert wird.

Weiterhin dürfen die wasserabsorbierenden Polymerpartikel keine unangenehmen Gerüche abgeben, insbesondere bei Flüssigkeitsbeladung.

Es bestand daher die Aufgabe ein verbessertes Verfahren zur Herstellung wasserabsorbierender Polymerpartikel bereitzustellen, bei dem Polymerpartikel mit einem hohen Weißegrad erzeugt werden.

Eine weitere Aufgabe war die Bereitstellung eines Verfahrens zur Herstellung wasserabsorbierender Polymerpartikel, wobei Polymerpartikel erzeugt werden, die frei von wahrnehmbaren Gerüchen sind, insbesondere bei Flüssigkeitsbeladung.

Weiterhin bestand die Aufgabe wasserabsorbierende Polymerpartikel mit einem hohen Weißegrad zur Verwendung in Hygieneartikeln bereitzustellen.

Gelöst wurde die Aufgabe der vorliegenden Erfindung durch ein Verfahren zur Nachvernetzung wasserabsorbierender Polymerpartikel, dadurch gekennzeichnet, dass zur Herstellung des Grundpolymers eine Acrylsäure eingesetzt wird, die bis 0,013 Gew.-% eines Halbethers eines Hydrochinons enthält, und der Gesamtpartialdruck eines oder mehrerer oxidierender Gase in der die wasserabsorbierenden Polymerpartikel überlagernden Atmosphäre während Trocknung und Nachvernetzungsreaktion weniger als 140 mbar beträgt.

Der Gesamtpartialdruck der oxidierenden Gase beträgt vorzugsweise weniger als 100 mbar, bevorzugt weniger als 50 mbar, besonders bevorzugt weniger als 10 mbar, ganz besonders bevorzugt weniger als 1 mbar.

Oxidierende Gase sind Stoffe, die bei 23°C einen Dampfdruck von mindestens 1013 mbar aufweisen und in Verbrennungsvorgängen als Oxidationsmittel wirken, beispielsweise Sauerstoff, Stickoxid und Stickstoffdioxid, insbesondere Sauerstoff.

Der Sauerstoffpartialdruck während Trocknung und Nachvernetzungsreaktion in der die wasserabsorbierenden Polymerpartikel überlagernden Atmosphäre beträgt vorzugsweise weniger als 100 mbar, bevorzugt weniger 50 mbar, besonders bevorzugt weniger als 10 mbar, ganz besonders bevorzugt weniger als 1 mbar.

Werden Trocknung und Nachvernetzung bei Umgebungsdruck, d.h. bei einem Gesamtdruck um 1013 mbar, oder im Bereich von 750 bis 1.250 mbar, vorzugsweise im Bereich von 800 bis 1.200 mbar, besonders bevorzugt im Bereich von 850 bis 1.150 mbar, ganz besonders bevorzugt im Bereich von 900 bis 1.100 mbar, durchgeführt, so wird

der Gesamtpartialdruck der oxidierenden Gase über deren Volumenanteil festgelegt. Der Anteil der oxidierenden Gase beträgt dabei weniger als 14 Vol.%, vorzugsweise weniger als 10 Vol.%, bevorzugt weniger als 5 Vol.-%, besonders bevorzugt weniger als 1 Vol.%, ganz besonders bevorzugt weniger als 0,1 Vol.-%.

Vorzugsweise werden Nachvernetzung und Trocknung bei vermindertem Druck durchgeführt, d.h. bei einem Gesamtdruck von weniger als 1.013 mbar. Der Gesamtdruck beträgt beispielsweise weniger als 670 mbar, vorzugsweise weniger als 480 mbar, besonders bevorzugt weniger als 300 mbar, ganz besonders bevorzugt weniger als 200 mbar. Werden Tocknung und Nachvernetzung unter Luft mit einem Sauerstoffgehalt von 20,8 Vol.% durchgeführt, so betragen die zu den obengenannten Gesamtdrücken korrespondierenden Sauerstoffpartialdrücke 139 mbar (670 mbar), 100 mbar (480 mbar), 62 mbar (300 mbar) und 42 mbar (200 mbar), wobei die jeweiligen Gesamtdrücke in den Klammern stehen.

Die vernetzten, wasserabsorbierenden Polymerpartikel werden beispielsweise in der Monographie "Modern Superabsorbent Polymer Technology", F.L. Buchholz und A.T. Graham, Wiley-VCH, 1998, oder in Ullmann's Encyclopedia of Industrial Chemistry, 6. Auflage, Band 35, Seiten 73 bis 103, beschrieben.

Die vernetzten, wasserabsorbierenden Polymerpartikel weisen typischerweise eine Zentrifugenretentionskapazität (CRC) von 10 bis 60 g/g, vorzugsweise von mindestens 15 g/g, besonders bevorzugt mindestens 20 g/g, ganz besonders bevorzugt mindestens 25 g/g, auf. Die Zentrifugenretentionskapazität (CRC) wird gemäß der von der EDANA (European Disposables and Nonwovens Association) empfohlenen Testmethode Nr. 441.2-02 "Centrifuge retention capacity" bestimmt.

Die wasserabsorbierenden Polymerpartikel weisen typischerweise eine Absorption unter Druck 0,7 psi (4,83 kPa) von mindestens 15 g/g, vorzugsweise mindestens 20 g/g, besonders bevorzugt mindestens 25 g/g, auf. Die Absorption unter Druck (AUL) wird gemäß der von der EDANA (European Disposables and Nonwovens Association) empfohlenen Testmethode Nr. 442.2-02 "Absorption under pressure" bestimmt.

Wasserabsorbierende Polymerpartikel können durch Polymerisation einer Monomerlösung, enthaltend

i) mindestens ein ethylenisch ungesättigtes, säuregruppentragendes Monomer,
ii) mindestens einen Vernetzer,
iii) gegebenenfalls ein oder mehrere mit i) copolymerisierbare ethylenisch und/oder allylisch ungesättigte Monomere und
iv) gegebenenfalls ein oder mehrere wasserlösliche Polymere, auf die die Monomere i), ii) und ggf. iii) zumindest teilweise aufgepfropft werden können,

wobei das dabei erhaltene Grundpolymer getrocknet, klassiert, mit

v) mindestens einem Nachvemetzer,

nachbehandelt, getrocknet und thermisch nachvemetzt wird, hergestellt werden.

Geeignete Monomere i) sind beispielsweise ethylenisch ungesättigte Carbonsäuren, wie Acrylsäure, Methacrylsäure, Maleinsäure, Fumarsäure und Itaconsäure, oder deren Derivate, wie Acrylamid, Methacrylamid, Acrylsäureester und Methacrylsäureester. Besonders bevorzugte Monomere sind Acrylsäure und Methacrylsäure. Ganz besonders bevorzugt ist Acrylsäure.

Die Monomere i), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden

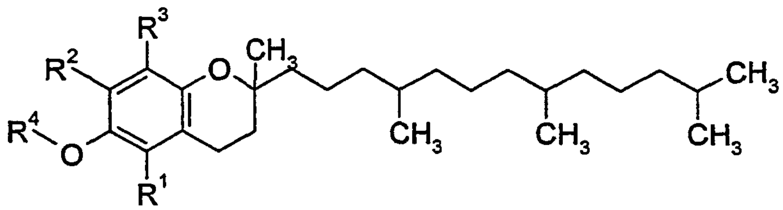

wobei $R^1$ Wasserstoff oder Methyl, $R^2$ Wasserstoff oder Methyl, $R^3$ Wasserstoff oder Methyl und $R^4$ Wasserstoff oder ein Säurerest mit 1 bis 20 Kohlenstoffatomen bedeutet.

Bevorzugte Reste für $R^4$ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit $R^1 = R^2 = R^3$ = Methyl, insbesondere racemisches alpha-Tocopherol. $R^4$ ist besonders bevorzugt Wasserstoff oder Acetyl. Insbesondere bevorzugt ist RRR-alpha-Tocopherol.

Die Monomerlösung enthält höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere bevorzugt um 50 Gew.-ppm, Hydrochinon-halbether, jeweils bezogen auf Acrylsäure, wobei Acrylsäuresalze rechnerisch als Acrylsäure mit berücksichtigt werden. Beilspielsweise kann zur Herstellung der Monomerlösung eine Acrylsäure mit einem entsprechenden Gehalt an Hydrochinonhalbether verwendet werden.

Die wasserabsorbierenden Polymere sind vernetzt, d.h. die Polymerisation wird in Gegenwart von Verbindungen mit mindestens zwei polymerisierbaren Gruppen, die in das Polymernetzwerk radikalisch einpolymerisiert werden können, durchgeführt. Geeignete Vernetzer ii) sind beispielsweise Ethylenglykoldimethacrylat, Diethylenglykoldiacrylat, Allylmethacrylat, Trimethylolpropantriacrylat, Triallylamin, Tetraallyloxyethan, wie in EP-A 530 438 beschrieben, Di- und Triacrylate, wie in EP-A 547 847, EP-A 559 476, EP-A 632 068, WO 93/21237, WO 03/104299, WO 03/104300, WO 03/104301 und in der deutschen Patentanmeldung mit dem Aktenzeichen 103 31 450.4 beschrieben, gemischte Acrylate, die neben Acrylatgruppen weitere ethylenisch ungesättigte Gruppen enthalten, wie in den deutschen Patentanmeldungen mit den Aktenzeichen 103 31 456.3 und 103 55 401.7 beschrieben, oder Vernetzermischungen, wie beispielsweise in DE-A 195 43 368, DE-A 196 46 484, WO 90/15830 und WO 02/32962 beschrieben.

Geeignete Vernetzer ii) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A 343 427 beschrieben sind. Weiterhin geeignete Vernetzer ii) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer ii) sind jedoch Di- und Triacrylate des 3- bis 20-fach ethoxylierten Glyzerins, des 3- bis 20-fach ethoxylierten Trimethylolpropans, des 3- bis 20-fach ethoxylierten Trimethylolethans, inbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des mindestens 40-fach ethoxylierten Glyzerins, Trimethylolethans oder Trimethylolpropans.

Ganz besonders bevorzugte Vernetzer ii) sind die mit Acrylsäure oder Methacrylsäure zu Di- oder Triacrylaten veresterten mehrfach ethoxylierten und/oder propoxylierten Glyzerine wie sie beispielsweise in der älteren deutschen Anmeldung mit Aktenzeichen DE 103 19 462.2 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5- fach ethoxylierten und/oder propoxylierten Glyzerins. Am meisten bevorzugt sind die Triacrylate des 3- bis 5-fach ethoxylierten und/oder propoxylierten Glyzerins. Diese zeichnen sich durch besonders niedrige Restgehalte (typischerweise unter 10 Gew.-ppm) im wasseraborbierenden Polymer aus und die wässrigen Extrakte der damit hergestellten wasserabsorbierenden Polymere weisen eine fast unveränderte Oberflächenspannung (typischerweise mindestens 0,068 N/m) im Ver gleich zu Wasser gleicher Temperatur auf.

Mit den Monomeren i) copolymerisierbare ethylenisch ungesättigte Monomere iii) sind beispielsweise Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere iv) können Polyvinylalkohol, Polyvinylpyrrolidon, Stärke, Stärkederivate, Polyglykole oder Polyacrylsäuren, vorzugsweise Polyvinylalkohol und Stärke, eingesetzt werden.

Die Herstellung eines geeigneten Grundpolymers sowie weitere geeignete hydrophile ethylenisch ungesättigte Monomere i) werden in DE-A 199 41 423, EP-A 686 650, WO 01/45758 und WO 03/104300 beschrieben.

Die Umsetzung wird vorzugsweise in einem Kneter, wie beispielsweise in WO 01/38402 beschrieben, oder auf einem Bandreaktor, wie beispielsweise in EP-A 955 086 beschrieben, durchgeführt.

Die Säuregruppen der erhaltenen Hydrogele sind üblicherweise teilweise neutralisiert, vorzugsweise zu 25 bis 95 mol%, bevorzugt zu 27 bis 80 mol-%, besonders bevorzugt zu 27 bis 30 mol-% oder 40 bis 75 mol%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung, als Schmelze, oder bevorzugt auch als Feststoff erreicht. Beispielsweise kann Natriumhydroxid mit einem Wasseranteil deutlich unter 50 Gew.% als wachsartige Masse mit einem Schmelzpunkt oberhalb 23°C vorliegen. In diesem Fall ist eine Dosierung

als Stückgut oder Schmelze bei erhöhter Temperatur möglich.

Die Neutralisation kann nach der Polymerisation auf der Stufe des Hydrogels durchgeführt werden. Es ist aber auch möglich bis zu 40 mol%, vorzugsweise 10 bis 30 mol-%, besonders bevorzugt 15 bis 25 mol-%, der Säureguppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Hydrogels eingestellt wird. Die Monomerlösung kann durch Einmischen des Neutralisationsmittels neutralisiert werden. Das Hydrogel kann mechanisch zerkleinert werden, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden. Die Neutralisation der Monomerlösung direkt auf den Endneutralisationsgrad ist bevorzugt.

Das neutralisierte Hydrogel wird dann mit einem Band- oder Walzentrockner getrocknet bis der Restfeuchtegehalt vorzugsweise unter 15 Gew.-%, insbesondere unter 10 Gew.% liegt, wobei der Wassergehalt gemäß der von der EDANA (European Disposables and Nonwovens Association) empfohlenen Testmethode Nr. 430.2-02 "Moisture content" bestimmt wird. Wahlweise kann zur Trocknung aber auch ein Wirbelbetttrockner oder ein beheizter Pflugscharmischer verwendet werden. Um besonders weiße Produkte zu erhalten, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß umso einfacher und das Produkt umso weißer, wenn der Feststoffgehalt des Gels möglichst hoch ist. Bevorzugt liegt der Feststoffgehalt des Geles vor der Trocknung daher zwischen 30 und 80 Gew.-%. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern. Im Regelfall führt aber auch eine ausreichende Belüftung und Abführung des Wasserdampfes zu einem noch akzeptablen Produkt. Vorteilhaft hinsichtlich Farbe und Produktqualität ist in der Regel eine möglichst kurze Trocknungszeit.

Eine weitere wichtige Funktion der Trocknung des Geles ist die hier noch stattfindende Verringerung des Restmonomerengehaltes im Superabsorber. Bei der Trocknung zerfallen nämlich eventuell noch vorhandene Reste der Initiatoren und führen zu einer Einpolymerisation von noch vorhandenen Restmonomeren. Außerdem reißen die verdampfenden Wassermengen noch vorhandene freie wasserdampfflüchtige Monomere, wie beispielsweise Acrylsäure mit, und verringern so ebenfalls den Restmonomerengehalt im Superabsorber.

Das getrocknete Hydrogel wird hiernach gemahlen und gesiebt, wobei zur Mahlung üblicherweise ein- oder mehrstufige Walzenstühle, bevorzugt zwei- oder dreistufige Walzenstühle, Stiftmühlen, Hammermühlen oder Schwingmühlen eingesetzt werden können.

Die Grundpolymere werden anschließend nachvernetzt. Hierzu geeignete Nachvernetzer v) sind Verbindungen, die mindestens zwei Gruppen enthalten, die mit den Carboxylatgruppen der Polymere kovalente Bindungen bilden können. Geeignete Verbindungen sind beispielsweise Alkoxysiliylverbindungen, Polyaziridine, Polyamine, Polyamidoamine, Di- oder Polyglycidylverbindungen, wie in EP-A 083 022, EP-A 543 303 und EP-A 937 736 beschrieben, mehrwertige Alkohole, wie in DE-C 33 14 019, DE-C 35 23 617 und EP-A 450 922 beschrieben, oder β-Hydroxyalkylamide, wie in DE-A 102 04 938 und US 6,239,230 beschrieben. Geeignet sind ferner Verbindungen mit gemischter Funktionalität, wie Glycidol, 3-Ethyl-3-Oxetanmethanol (Trimethylolpropanoxetan), wie in EP-A 1 199 327 beschrieben, Aminoethanol, Diethanolamin, Triethanolamin oder Verbindungen, die nach der ersten Reaktion eine weitere Funktionalität ausbilden, wie Ethylenoxid, Propylenoxid, Isobutylenoxid, Aziridin, Azetidin oder Oxetan.

Desweiteren sind in DE-A 40 20 780 zyclische Karbonate, in DE-A 198 07 502 2-Oxazolidon und dessen Derivate, wie N-(2-Hydroxyethyl)-2-oxazolidon, in DE-A 198 07 992 Bis- und Poly-2-oxazolidinone, in DE-A 198 54 573 2-Oxotetrahydro-1,3-oxazin und dessen Derivate, in DE-A 198 54 574 N-Acyl-2-Oxazolidone, in DE-A 102 04 937 zyklische Harnstoffe, in der deutschen Patentanmeldung mit dem Aktenzeichen 103 34 584.1 bizyklische Amidacetale, in EP-A 1 199 327 Oxetane und zyklische Harnstoffe und in WO 03/031482 Morpholin-2,3-dion und dessen Derivate als geeignete Nachvernetzer v) beschrieben.

Die Nachvernetzung wird üblicherweise so durchgeführt, dass eine Lösung des Nachvernetzers auf das Hydrogel oder die trockenen Grundpolymerpartikel aufgesprüht wird. Im Anschluss an das Aufsprühen wird thermisch getrocknet, wobei die Nachvernetzungsreaktion sowohl vor als auch während der Trocknung stattfinden kann.

Bevorzugte Nachvernetzer v) sind Amidacetale oder Carbaminsäureester der allgemeinen Formel I

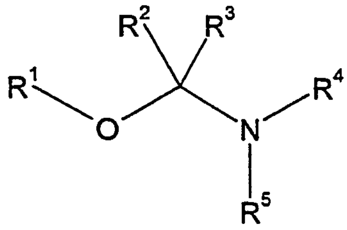

(I)

worin

$R^1$ $C_1$-$C_{12}$-Alkyl, $C_2$-$C_{12}$-Hydroxyalkyl, $C_2$-$C_{12}$-Alkenyl oder $C_6$-$C_{12}$-Aryl,

$R^2$ X oder $OR^6$

$R^3$ Wasserstoff, $C_1$-$C_{12}$-Alkyl, $C_2$-$C_{12}$-Hydroxyalkyl, $C_2$-$C_{12}$ Alkenyl oder $C_6$-$C_{12}$-Aryl, oder X,

$R^4$ $C_1$-$C_{12}$-Alkyl, $C_2$-$C_{12}$-Hydroxyalkyl, $C_2$-$C_{12}$-Alkenyl oder $C_6$-$C_{12}$-Aryl,

$R^5$ Wasserstoff, $C_1$-$C_{12}$-Alkyl, $C_2$-$C_{12}$-Hydroxyalkyl, $C_2$-$C_{12}$-Alkenyl, $C_1$-$C_{12}$-Acyl oder $C_6$-$C_{12}$-Aryl,

$R^6$ $C_1$-$C_{12}$-Alkyl, $C_2$-$C_{12}$-Hydroxyalkyl, $C_2$-$C_{12}$-Alkenyl oder $C_6$-$C_{12}$-Aryl und

X ein für die Reste $R^2$ und $R^3$ gemeinsamer Carbonyl-Sauerstoff

bedeuten, wobei $R^1$ und $R^4$ und/oder $R^5$ und $R^6$ ein verbrücktes $C_2$-$C_6$-Alkandiyl sein können, und wobei die obengenannte Reste $R^1$ bis $R^6$ noch insgesamt über ein bis zwei freie Valenzen verfügen können und mit diesen freien Valenzen mit mindestens einem geeigneten Grundkörper verbunden sein können,
oder mehrwertige Alkohole, wobei der mehrwertige Alkohol vorzugsweise ein Molekulargewicht von weniger als 100 g/mol, bevorzugt von weniger als 90 g/mol, besonders bevorzugt von weniger als 80 g/mol, ganz besonders bevorzugt von weniger als 70 g/mol, pro Hydroxylgruppe sowie keine vincinalen, geminalen, sekundären oder tertiären Hydroxylgruppen aufweist, und mehrwertige Alkohole entweder Diole der allgemeinen Formel lia

$HO-R^6-OH$ (IIa)

worin $R^6$ entweder einen unverzweigten Dialkylrest der Formel $-(CH_2)_n-$, wobei n eine ganze Zahl von 3 bis 20, bevorzugt 3 bis 12 ist, wobei 4 weniger bevorzugt ist, bedeutet und beide Hydroxylgruppen endständig sind, oder $R^6$ einen unverzweigten, verzweigten oder zyklischen Dialkylrest bedeutet, oder Polyole der allgemeinen Formel IIb

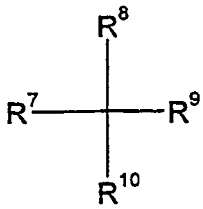

(IIb)

worin die Reste $R^7$, $R^8$, $R^9$, $R^{10}$ unabhängig voneinander Wasserstoff, Hydroxyl, Hydroxymethyl, Hydroxyethyloxymethyl, 1-Hydroxyprop-2-yloxymethyl, 2-Hydroxypropyloxymethyl, Methyl, Ethyl, n-Propyl, Isopropyl, n-Butyl, n-Pentyl, n-Hexyl, 1,2-Dihydroxyethyl, 2-Hydroxyethyl, 3-Hydroxypropyl oder 4-Hydroxybutyl bedeuten und insgesamt 2, 3, oder 4, bevorzugt 2 oder 3, Hydroxylgruppen vorhanden sind, und nicht mehr als einer der Reste $R^7$, $R^8$, $R^9$, oder $R^{10}$ gleich Hydroxyl bedeutet, sind,
oder zyklische Karbonate der allgemeinen Formel III

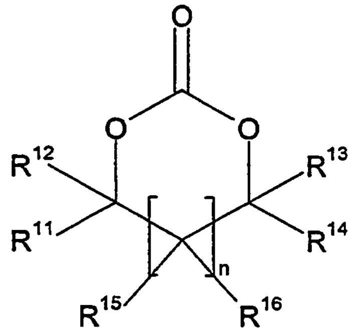

(III)

worin $R^{11}$, $R^{12}$, $R^{13}$, $R^{14}$, $R^{15}$ und $R^{16}$ unabhängig voneinander Wasserstoff, Methyl, Ethyl, n-Propyl, Isopropyl, n-Butyl, sek.-Butyl oder Isobutyl, und n entweder 0 oder 1 ist,
oder Bisoxazoline der allgemeinen Formel IV

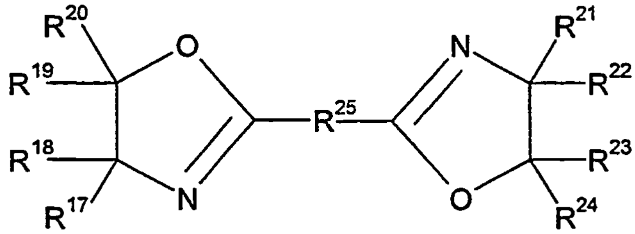

(IV)

worin $R^{17}$, $R^{18}$, $R^{19}$, $R^{20}$, $R^{21}$, $R^{22}$, $R^{23}$ und $R^{24}$ unabhängig voneinander Wasserstoff, Methyl, Ethyl, n-Propyl, Isopropyl, n-Butyl, sek.-Butyl oder Isobutyl, und $R^{25}$ eine Einfachbindung, einen linearen, verzweigten oder zyklischen $C_2$-$C_{12}$-Dialkylrest, oder einen Polyalkoxydiylrest darstellt, welcher aus ein bis zehn Ethylenoxid- und/oder Propylenoxideinheiten aufgebaut ist, wie sie beispielsweise Polyglykoldicarbonsäuren aufweisen.

Die bevorzugten Nachvernetzer v) sind außerordentlich selektiv. Neben- und Folgereaktionen, die zu flüchtigen und damit übelriechenden Verbindungen führen sind minimiert. Die mit den bevorzugten Nachvernetzern v) hergestellten wasserabsorbierenden Polymere sind daher auch im angefeuchteten Zustand geruchsneutral.

Dagegen können Epoxyverbindungen bei hohen Temperaturen und Anwesenheit geeigneter Katalysatoren verschiedene Umlagerungsreaktionen eingehen, die beispielsweise zu Aldehyden oder Ketonen führen. Diese können dann weitere Folgereaktionen eingehen, wodurch sich letztendlich übelriechende Verunreinigungen bilden, die wegen ihres Geruchs in Hygieneartikeln unerwünscht sind. Daher sind Epoxyverbindungen oberhalb einer Temperatur von ca. 140 bis 150°C weniger geeignet für die Nachvernetzung. Bei Amino- bzw. Iminogruppen enthaltenden Nachvemetzem v) kommt es bei ähnlichen Temperaturen zu noch unübersichtlicheren Umlagerungsreaktionen, wodurch leicht übelriechende Spurenverunreinigungen und bräunliche Produktverfärbungen auftreten.

Mehrwertige Alkohole als Nachvernetzer v) benötigen aufgrund ihrer geringen Reaktivität hohe Nachvernetzungstemperaturen. Alkohole, die vincinale, geminale, sekundäre und tertiäre Hydroxylgruppen aufweisen, bilden dabei im Hygienebereich unerwünschte Nebenprodukte, die zu unangenehmen Gerüchen und/oder Verfärbungen des betreffenden Hygieneartikels während der Herstellung oder des Gebrauchs führen.

Bevorzugte Nachvernetzer v) der allgemeinen Formel I sind 2-Oxazolidone, wie 2-Oxazolidon und N-Hydroxyethyl-2-oxazolidon, N-Methyl-2-Oxazolidon, N-Acyl-2-oxazolidone, wie N-Acetyl-2-oxazolidon, 2-Oxotetrahydro-1,3-oxazin, bicyclische Amidacetale, wie 5-Methyl-1-aza-4,6-dioxa-bicyclo[3.3.0]octan, 1-Aza-4,6-dioxabicyclo[3.3.0]octan und 5-Isopropyl-1-aza-4,6-dioxa-bicyclo [3.3.0] octan, Bis-2-oxazolidone und Poly-2-oxazolidone.

Besonders bevorzugte Nachvernetzer v) der allgemeinen Formel I sind 2-Oxazolidon, N-Methyl-2-Oxazolidon, N-Hydroxyethyl-2-oxazolidon und N-Hydroxypropyl-2-oxazolidon.

Bevorzugte Nachvernetzer v) der allgemeinen Formel IIa sind 1,3-Propandiol, 1,5-Pentandiol, 1,6-Hexandiol und 1,7-Heptandiol. Weitere Beispiele für Nachvernetzer der Formel IIa sind 1,3-Butandiol, 1,8-Octandiol, 1,9-Nonandiol und 1,10-Decandiol;

Die Diole IIa sind vorzugsweise wasserlöslich, wobei sich die Diole der allgemeinen Formel IIa bei 23°C zu mindestens 30 Gew.-%, bevorzugt zu mindestens 40 Gew.-%, besonders bevorzugt zu mindestens 50 Gew.-%, ganz besonders bevorzugt mindestens zu 60 Gew.-%, in Wasser lösen, wie beispielsweise 1,3-Propandiol und 1,7-Heptandiol. Noch mehr bevorzugt sind solche Nachvernetzer die bei 25°C flüssig sind.

Bevorzugte Nachvernetzer v) der allgemeinen Formel IIb sind Butan-1,2,3-triol, Butan-1,2,4-triol, Glyzerin, Trimethylolpropan, Trimethylolethan, Pentaerythrit, pro Molekül 1-bis 3-fach-ethoxyliertes Glyzerin, Trimethylolethan

oder Trimethylolpropan und pro Molekül 1- bis 3-fach-propoxyliertes Glyzerin, Trimethylolethan oder Trimethylolpropan. Weiterhin bevorzugt sind 2-fach ethoxyliertes oder propoxyliertes Neopentylglykol. Besonders bevorzugt sind 2-fach und 3-fach ethoxyliertes Glyzerin, Neopentylglykol, 2-Methyl-1,3-Propandiol und Trimethylolpropan.

Bevorzugte mehrwertige Alkohole IIa und IIb weisen bei 23°C eine Viskosität von weniger als 3000 mPas, vorzugsweise weniger als 1500 mPas, bevorzugt weniger als 1000 mPas, besonders bevorzugt weniger als 500 mPas, ganz besonders bevorzugt weniger als 300 mPas, auf.

Besonders bevorzugte Nachvernetzer v) der allgemeinen Formel III sind Ethylencarbonat und Propylencarbonat.

Ein besonders bevorzugter Nachvernetzer v) der allgemeinen Formel IV ist 2,2'-Bis(2-oxazolin).

Der mindestens eine Nachvernetzer v) wird typischerweise in einer Menge von höchstens 0,30 Gew.-%, vorzugsweise von höchstens 0,15 Gew.-%, besonders bevorzugt von 0,001 bis 0,095 Gew.-%, jeweils bezogen auf das Grundpolymer, als wässrige Lösung eingesetzt.

Es kann ein einzelner Nachvernetzer v) aus der obigen Auswahl verwendet werden oder beliebige Gemische verschiedener Nachvemetzer.

Die wässrige Nachvernetzerlösung kann neben dem mindestens einen Nachvernetzer v) typischerweise noch ein Cosolvens enthalten.

Technisch gut geeignete Cosolventien sind $C_1$-$C_6$-Alkohole, wie Methanol, Ethanol, n-Propanol, Isopropanol, n-Butanol, sec-Butanol, tert-Butanol oder 2-Methyl-1-Propanol, $C_2$-$C_5$-Diole, wie Ethylenglykol, 1,2-Propylenglykol oder 1,4-Butandiol, Ketone, wie Aceton, oder Carbonsäureester, wie Essigsäureethylester. Nachteilig an vielen dieser Cosolventien ist, dass sie typische Eigengerüche aufweisen.

Das Cosolvens selbst ist unter den Reaktionsbedingungen idealerweise kein Nachvernetzer. Es kann jedoch im Grenzfall und abhängig von Verweilzeit und Temperatur dazu kommen, dass das Cosolvens teilweise zur Vernetzung beiträgt. Dies ist insbesondere dann der Fall, wenn der Nachvernetzer v) relativ träge ist und daher auch selbst sein Cosolvens bilden kann, wie beispielsweise bei Einsatz zyklischer Karbonate der allgemeinen Formel III, Diole der allgemeinen Formel IIa oder Polyole der allgemeinen Formel IIb. Solche Nachvernetzer v) können im Gemisch mit reaktiveren Nachvernetzern v) auch in der Funktion als Cosolvens eingesetzt werden, da die eigentliche Nachvernetzungsreaktion dann bei niedrigeren Temperaturen und/oder kürzeren Verweilzeiten als in Abwesenheit des reaktiveren Vernetzers v) durchgeführt werden kann. Da das Cosolvens in relativ großen Mengen verwendet wird und auch teilweise im Produkt verbleibt, darf es nicht toxisch sein.

Im erfindungsgemäßen Verfahren eignen sich die Diole der allgemeinen Formel IIa, die Polyole der allgemeinen Formel IIb, sowie die zyklischen Karbonate der allgemeinen Formel III auch als Cosolventien. Diese Funktion erfüllen sie in Gegenwart eines reaktiven Nachvemetzers v) der allgemeinen Formel I und/oder IV und/oder eines Di- oder Triyglycidylvernetzers. Bevorzugte Cosolventien im erfindungsgemäßen Verfahren sind jedoch insbesondere die Diole der allgemeinen Formel IIa, insbesondere, wenn die Hydroxygruppen sterisch durch Nachbargruppen an einer Reaktion behindert werden. Solche Diole eignen sich zwar prinzipiell auch als Nachvernetzer v), erfordern dazu jedoch deutlich höhere Reaktionstemperaturen oder gegebenenfalls höhere Einsatzmengen als sterisch ungehinderte Diole.

Weitere im erfindungsgemäßen Verfahren besonders bevorzugte Cosolventien sind die Polyole der allgemeinen Formel IIb. Insbesondere bevorzugt sind hiervon die 2- bis 3-fach alkoxylierten Polyole. Besonders geeignet als Cosolventien sind aber auch 3- bis 15-fach, ganz besonders 5- bis 10-fach ethoxylierte Polyole auf der Basis von Glyzerin, Trimethylolpropan, Trimethylolethan oder Pentaerythrit. Besonders gut geeignet ist 7-fach ethoxyliertes Trimethylolpropan.

Geeignete sterisch gehinderte und damit reaktionsträge mehrwertige Alkohole sind auch mehrwertige Alkohole mit beliebigen Molekulargewichten, die keine vincinalen, geminalen oder sekundären Hydroxylgruppen aufweisen.

Beispiele für solche sterisch gehinderten und daher als Cosolvens besonders bevor zugten Diole der allgemeinen Formel IIa sind 2,2-Dimethyl-1,3-propandiol (Neopentylglykol), 2-Methyl-1,3-Propandiol und 2,4-Dimethylpentan-2,4-diol.

Weitere geeignete Cosolventien sind Di(trimethylolpropan) sowie 5-Ethyl-1,3-dioxan-5-methanol.

Besonders bevorzugte Kombinationen aus wenig reaktivem Nachvernetzer v) als Cosolvens und reaktivem Nachvemetztzer v) sind Kombinationen von bevorzugten mehrwertigen Alkoholen, Diolen der allgemeinen Formel IIa und Polyolen der allgemeinen Formel IIb, mit Amidacetalen oder Carbaminsäureestern der allgemeinen Formel 1.

Ganz besonders bevorzugte Kombinationen sind 2-Oxazolidon/1,3-Propandiol und N-(2-Hydroxyethyl)-2-oxazolidon/1,3-Propandiol.

Weiterhin bevorzugte Kombinationen sind solche mit Ethylenglykoldiglycidylether oder Glyzerindi- oder triglycidylether mit folgenden Lösemitteln, Cosolventien oder Covernetzem: Isopropanol, 1,3-Propandiol, 2-Methyl-1,3-propandiol, Neopentylglykol, 1,5-Pentandiol, 1,6-Hexandiol, 1,7-Heptandiol oder Gemischen davon.

Das Cosolvens hat vorzugsweise einen Siedepunkt von höchstens 160°C, besonders bevorzugt von höchstens 140°C, ganz besonders bevorzugt von höchstens 120°C, oder vorzugsweise einen Siedepunkt von mindestens 200°C, besonders bevorzugt von mindestens 220°C, ganz besonders bevorzugt von mindestens 250°C.

Im erfindungsgemäßen Verfahren besonders gut geeignete Cosolventien sind daher auch solche, die ein niedrig siedendes Azeotrop mit Wasser oder einem zweiten Cosolvens bilden. Bevorzugt liegt der Siedepunkt dieses Azeotrops bei höchstens 160°C, besonders bevorzugt höchstens 140°C, ganz besonders bevorzugt bei höchstens 120°C. Weiterhin gut geeignet sind wasserdampfflüchtige Cosolventien, da diese ganz oder teilweise mit dem bei der Trocknung verdampfenden Wasser entfernt werden.

Nachvernetzer v) und Cosolventien mit einem Siedepunkt, der nicht deutlich über oder unter der Temperatur im Nachvernetzungstrockner liegt, führen überraschenderweise oftmals zu wasserabsorbierenden Polymerpartikeln mit einem unerwünschten chemischen Geruch und die Polymere sind stark vergilbt und enthalten oftmals schwarze Stippen und andere Verunreinigungen.

Häufig beträgt die Konzentration des Cosolvens in der wässrigen Nachvernetzerlösung, von 15 bis 50 Gew.-%, vorzugsweise von 15 bis 40 Gew.-%, besonders bevorzugt von 20 bis 35 Gew.-%, bezogen auf die Nachvernetzerlösung. Bei Cosolventien, die mit Wasser nur begrenzt mischbar sind, wird man vorteilhaft die wässrige Nachvernetzerlösung so einstellen, dass nur eine Phase vorliegt, gegebenenfalls durch Erniedrigung der Konzentration des Cosolvens.

In einer bevorzugten Ausführungsform wird kein Cosolvens eingesetzt. Der mindestens eine Nachvernetzer v) wird dann nur als Lösung in Wasser angewandt, gegebenenfalls unter Zusatz eines Deagglomerationshilfsmittels.

Die Konzentration des mindestens einen Nachvernetzers v) in der wässrigen Nachvernetzerlösung, beträgt beispielsweise 1 bis 20 Gew.-%, vorzugsweise 1,5 bis 10 Gew.-%, besonders bevorzugt 2 bis 5 Gew.-%, bezogen auf die Nachvernetzerlösung.

Die Gesamtmenge der Nachvernetzerlösung bezogen auf Grundpolymer beträgt üblicherweise von 0,3 bis 15 Gew.-%, vorzugsweise von 2 bis 6 Gew.-%.

In einer bevorzugten Ausführungsform wird dem Grundpolymer ein Tensid als Deagglomerationshilfsmittel, beispielsweise Sorbitanmonoester, wie Sorbitanmonococoat und Sorbitanmonolaurat, oder ethoxylierte Varianten davon, wie beispielsweise Polysorbat 20®, zugesetzt. Weitere sehr geeignete Deagglomerationshilfsmittel stellen die ethoxylierten und alkoylierten Derivate des 2-Propylheptanols dar, die unter den Handelsmarken Lutensol XL® und Lutensol XP® vertrieben werden (BASF AG, DE). Das Deagglomerationshilfsmittel kann getrennt dosiert oder der Nachvernetzerlösung zugesetzt werden. Vorzugsweise wird das Deagglomerationshilfsmittel der Nachvernetzerlösung zugesetzt.

Die Einsatzmenge des Deagglomerationshilfsmittels bezogen auf Grundpolymer beträgt beispielsweise 0 bis 0,1 Gew.-%, vorzugsweise 0 bis 0,01 Gew.-%, besonders bevorzugt 0 bis 0,002 Gew-%. Vorzugsweise wird das Deagglomerationshilfsmittel so dosiert, dass die Oberflächenspannung eines wässrigen Extrakts des gequollenen Grundpolymers und/oder des gequollenen nachvernetzten wasserabsorbierenden Polymeren bei 23°C mindestens 0,060 N/m, vorzugsweise mindestens 0,062 N/m, besonders bevorzugt mindestens 0,065 N/m, und vorteilhaft höchstens 0,072 N/m beträgt.

Das im erfindungsgemäßen Verfahren eingesetzte getrocknete Grundpolymer weist typischerweise einen Restfeuchtegehalt nach der Trocknung und vor Aufbringen der Nachvernetzungslösung von 0 bis 13 Gew.%, bevorzugt 2 bis 9 Gew.% auf. Optional kann dieser Feuchtegehalt aber auch beispielsweise durch Aufbringen von Wasser in einem vorgeschalteten Sprühmischer auf bis zu 75 Gew.% erhöht werden. Der Feuchtegehalt wird gemäß der von der EDANA (European Disposables and Nonwovens Association) empfohlenen Testmethode Nr. 430.2-02 "Moisture content" bestimmt. Eine solche Erhöhung des Feuchtegehalts führt zu einer leichten Vorquellung des Grundpolymers und verbessert die Verteilung des Vernetzers auf der Oberfläche sowie die Durchdringung der Partikel.

Die im erfindungsgemäßen Verfahren einsetzbaren Sprühdüsen unterliegen keiner Beschränkung. Geeignete Düsen und Zerstäubungssysteme sind beispielsweise in den folgenden Literaturstellen beschrieben: Zerstäuben von Flüssigkeiten, Expert-Verlag, Bd. 660, Reihe Kontakt & Studium, Thomas Richter (2004) sowie in Zerstäubungstechnik, Springer-Verlag, VDI-Reihe, Günter Wozniak (2002). Einsetzbar sind mono- und polydisperse Sprühsysteme. Unter den polydispersen Systemen sind Einstoff-Druckdüsen (strahl- oder lamellenbildend), Rotationszerstäuber, Zweistoffzerstäuber, Ultraschallzerstäuber und Pralldüsen geeignet. Bei den Zweistoffzerstäubern kann die Mischung der Flüssigkeits- mit der Gasphase sowohl innenliegend als auch außenliegend erfolgen. Das Sprühbild der Düsen ist unkritisch und kann jede beliebige Form annehmen, beispielsweise Rundstrahl-, Flachstrahl-, Weitwinkel-Rundstrahl- oder Kreisring-Spritzbild. Vorteilhaft ist die Verwendung eines nicht-oxidierenden Gases falls Zweistoffzerstäuber eingesetzt werden, besonders bevorzugt sind Stickstoff, Argon oder Kohlendioxid. Derartigen Düsen kann die zu versprühende Flüssigkeit unter Druck zugeführt werden. Die Zerteilung der zu versprühenden Flüssigkeit kann dabei dadurch erfolgen, dass sie nach Erreichen einer bestimmten Mindestgeschwindigkeit in der Düsenbohrung entspannt wird. Ferner können für den erfindungsgemäßen Zweck auch Einstoffdüsen, wie beispielsweise Schlitzdüsen oder Drallkammern (Vollkegeldüsen) verwendet werden (beispielsweise von Düsen-Schlick GmbH, DE, oder von Spraying Systems Deutschland GmbH, DE). Derartige Düsen sind auch in der EP-A 534 228 und der EP-A 1 191 051 beschrieben.

Im Anschluß an das Aufsprühen wird das Polymerpulver thermisch getrocknet, wobei die Nachvernetzungsreaktion sowohl vor, während oder nach der Trocknung stattfinden kann.

Das Aufsprühen der Nachvernetzerlösung wird vorzugsweise in Mischern mit bewegten Mischwerkzeugen,

wie Schneckenmischer, Paddelmischer, Scheibenmischer, Pflugscharmischer und Schaufelmischer, durchgeführt. Besonders bevorzugt sind Vertikalmischer, ganz besonders bevorzugt sind Pflugscharmischer und Schaufelmischer. Geeignete Mischer sind beispielsweise Lödige®-Mischer, Bepex®-Mischer, Nauta®-Mischer, Processall®-Mischer und Schugi®-Mischer.

Die thermische Trocknung wird vorzugsweise in Kontakttrocknem, besonders bevorzugt Schaufeltrocknern, ganz besonders bevorzugt Scheibentrocknern, durchgeführt. Geeignete Trockner sind beispielsweise Bepex®-Trockner und Nara®-Trockner. Überdies können auch Wirbelschichttrockner, beispielsweise Carman®-Trockner, eingesetzt werden.

Die Trocknung kann im Mischer selbst erfolgen, beispielsweise durch Beheizung des Mantels oder Einblasen warmer Inertgase. Ebenso geeignet ist ein nachgeschalteter Trockner, wie beispielsweise ein Hordentrockner, ein Drehrohrofen oder eine beheizbare Schnecke. Es kann aber auch beispielsweise eine azeotrope Destillation als Trocknungsverfahren benutzt werden.

Besonders bevorzugt wird die Nachvernetzerlösung in einem Hochgeschwindigkeitsmischer, beispielsweise vom Typ Schugi-Flexomix® oder Turbolizer®, auf das Grundpolymer aufgebracht und in einem Reaktionstrockner, beispielsweise vom Typ Nara-Paddle-Dryer® oder einem Scheibentrockner, thermisch nachvernetzt. Das eingesetzte Grundpolymer kann aus vorhergehenden Prozessschritten noch eine Temperatur von 10 bis 120°C aufweisen, die Nachvernetzerlösung kann eine Temperatur von 0 bis 150°C aufweisen. Insbesondere kann die Nachvernetzerlösung zur Verminderung der Viskosität erwärmt werden. Bevorzugt zur Nachvernetzung und Trocknung ist dabei der Temperaturbereich von 30 bis 220°C, insbesondere 120 bis 210°C, besonders bevorzugt 145 bis 190°C. Die bevorzugte Verweilzeit bei dieser Temperatur im Reaktionsmischer oder Trockner beträgt unter 100 Minuten, besonders bevorzugt unter 70 Minuten, am meisten bevorzugt unter 40 Minuten. Falls ein Wirbelschichttrockner eingesetzt wird beträgt die Verweilzeit vorzugsweise unter 30 Minuten, besonders bevorzugt unter 20 Minuten, ganz besonders bevorzugt unter 10 Minuten.

Der Nachvemetzungstrockner wird im erfindungsgemäßen Verfahren vorzugsweise während der Trocknungs- und Nachvernetzungsreaktion mit einem Inertgas gespült, um die Dämpfe zu entfernen und oxidierende Gase, wie Luftsauerstoff, zu verdrängen. Zur Unterstützung der Trocknung werden der Trockner und die angeschlossenen Aggregate thermisch gut isoliert und möglichst vollständig beheizt.

Geeignete Inertgase sind beispielsweise Stickstoff, Kohlendioxid, Argon, Wasserdampf, wobei Stickstoff bevorzugt ist. Die Inertgasmenge beträgt vorzugsweise 0,0001 bis 10 $m^3$, bevorzugt 0,001 bis 5 $m^3$, besonders bevorzugt 0,005 bis 1 $m^3$, und ganz besonders bevorzugt 0,005 bis 0,1 $m^3$, bezogen auf 1 kg wasserabsorbierende Polymerpartikel.

Inertgase im erfindungsgemäßen Verfahren sind bei der Nachvernetzungstemperatur und gegebenem Druck im Nachvemetzungstrockner gasförmig vorliegende Stoffe, die unter diesen Bedingungen nicht oxidierend auf die Bestandteile des trocknenden Superabsorbers wirken. Vorzugsweise herrscht dabei im Nachvemetzungstrockner Atmosphärendruck, wahlweise aber auch leichter Unter- oder Überdruck.

Zur Erzeugung eines möglichst weißen Polymers wird im erfindungsgemäßen Verfahren der Gasraum im Trockner möglichst frei von oxidierenden Gasen gehalten. Es ist erfindungsgemäß möglich das Polymerpulver über Kontaktflächen im Trockner zu beheizen, oder über zugeführtes warmes Inertgas, oder über eine Mischung eines oder mehrerer Inertgase mit Wasserdampf, oder nur mit Wasserdampf allein. Bei Zufuhr der Wärme über Kontaktflächen ist es möglich die Reaktion bei leichtem oder vollständigem Unterdruck unter Inertgas durchzuführen. Bei Verwendung von Wasserdampf zum direkten Beheizen des Polymerpulvers ist es erfindungsgemäß wünschenswert den Trockner bei Normaldruck oder Überdruck zu betreiben. In diesem Fall kann es sinnvoll sein den Nachvernetzungsschritt in einen Aufheizschritt und einen Reaktionsschritt unter Inertgas aber ohne Wasserdampf aufzuspalten. Dies kann in einem oder mehreren Apparaten realisiert werden. Erfindungsgemäß kann das Polymer schon im Nachvemetzungsmischer mit Wasserdampf aufgeheizt werden.

Im erfindungsgemäßen Verfahren kann das Inertgas, wenn es nicht Wasserdampf enthält, über Düsen in den Nachvemetzungstrockner eingeblasen werden, besonders bevorzugt wird das Inertgas aber bereits im oder kurz vor dem Nachvemetzungsmischer über Düsen dem Polymerstrom zugegeben. Beispielsweise kann der Sauerstoffgehalt in der Atmosphäre des Nachvernetzungstrockners oder des Nachvernetzungsmischers mittels Sauerstoffsonden kontrolliert werden.

Selbstverständlich können mit den Dämpfen abgeführte Cosolventien außerhalb des Reaktionstrockners wieder kondensiert und gegebenenfalls rezyklisiert werden.

Nach Abschluss der Reaktionstrocknung werden die getrockneten wasserabsorbierenden Polymerpartikel abgekühlt. Vorzugsweise überführt man dazu das warme und trockene Polymer im kontinuierlichen Betrieb in einen nachgeschalteten Kühler. Dieser kann beispielsweise ein Scheibenkühler, ein Nara-Paddle-Kühler oder ein Schneckenkühler sein. Gekühlt wird dabei über die Wände und gegebenenfalls die Rührorgane des Kühlers, welche von einem geeigneten Kühlmedium wie beispielsweise Warm- oder Kaltwasser durchströmt werden. Wahlweise kann jedoch auch ein Wirbelschichtkühler eingesetzt werden. Zweckmäßig können im Kühler Wasser oder wässrige Lösungen von Additiven aufgesprüht werden; dadurch erhöht sich die Effizienz der Kühlung (partielle Wasserverdampfung) und der Restfeuchtegehalt im Fertigprodukt kann auf 0 bis 6 Gew.-%, vorzugsweise 0,01 bis 4 Gew.-%, besonders bevorzugt 0,1 bis 3 Gew.-%, eingestellt werden. Der erhöhte Restfeuchtegehalt verringert den Staubgehalt des Produkts.

Optional kann jedoch im Kühler auch nur gekühlt werden und die Zugabe von Wasser und Additiven in einem nachgeschalteten separaten Mischer durchgeführt werden. Die Kühlung stoppt die Reaktion durch Unterschreiten der Reaktionstemperatur und die Temperatur braucht insgesamt nur so weit abgesenkt werden, dass das Produkt sich problemlos in Plastiksäcke oder in Silo-LKW abpacken lässt.

Optional können aber alle bekannten Beschichtungen, wie filmbildende Polymere, Dendrimere, polykationische Polymere (wie Polyvinylamin, Polyethylenimin oder Polyallylamin), wasserunlösliche polyvalente Metallsalze, wie Kalziumsulfat oder Kalziumphosphat, wasserlösliche polyvalente Metallsalze, wie Aluminiumsulfat, Kalzium- oder Magnesiumsalze, oder hydrophile anorganische Partikel, wie Tonminerale, pyrogene Kieselsäure, Aluminiumoxid und Magnesiumoxid, zusätzlich aufgebracht werden. Dadurch können zusätzliche Effekte, beispielsweise eine verringerte Verbackungsneigung, verbesserte Verarbeitungseigenschaften oder eine weiter gesteigerte Flüssigkeitsleitfähigkeit (SFC) erreicht werden. Wenn die Additive in Form von Dispersionen eingesetzt und aufgesprüht werden, dann werden sie bevorzugt als wässrige Dispersionen eingesetzt, und es wird bevorzugt noch zusätzlich ein Entstaubungsmittel zur Fixierung des Additivs auf der Oberfläche des wasserabsorbierenden Polymers aufgebracht. Das Entstaubungsmittel wird dann entweder direkt der Dispersion des anorganischen pulvrigen Additivs hinzugefügt, optional kann es aber als separate Lösung vor, während, oder nach dem Auftrag des anorganischen pulvrigen Additivs durch Aufsprühen hinzugefügt werden. Am meisten bevorzugt ist die gleichzeitige Aufsprühung von Nachvernetzungsmittel, Entstaubungsmittel und pulvrigem anorganischen Additiv in der Oberflächennachvernetzung. In einer weiteren bevorzugten Verfahrensvariante wird das Entstaubungsmittel aber separat im Kühler zugegeben, beispielsweise durch Aufsprühen von oben, unten oder von der Seite. Besonders geeignete Entstaubungsmittel, die auch zur Fixierung pulvriger anorganischer Additive an der Oberfläche der wasserabsorbierenden Polymerpartikel dienen können, sind Polyethylenglykole mit einem Molekulargewicht von 400 bis 20000 g/mol, Polyglyzerin, 3- bis 100-fach ethoxylierte Polyole, wie Trimethylolpropan, Glyzerin, Sorbitol und Neopentylglykol. Besonders geeignet sind 7- bis 20-fach ethoxyliertes Glyzerin oder Trimethylolpropan, wie beispielsweise Polyol TP 70® (Perstorp, SE). Letztere haben insbesondere den Vorteil, dass sie die Oberflächenspannung eines wässrigen Extrakts des wasserabsorbierenden Hydrogels nur unwesentlich herabsetzen.

In einer besonders bevorzugten Ausführungsform der Erfindung werden Kalziumphosphat (beispielsweise TCP 130, Fa. Rhodia), Nachvernetzer (vorzugsweise 2-Oxazolidon und/oder 1,3-Propandiol und/oder 1,2-Propandiol), organisches Lösemittel (vorzugsweise Isopropanol), Entstaubungsmittel (vorzugsweise mindestens 7-fach ethoxyliertes Glyzerin, Trimethylolpropan oder Trimethylolethan) und gegebenenfalls noch etwas Tensid (bevorzugt Span® 20) mit Wasser zu einer Dispersion angerührt und dann mittels eines Sprühmischers (vorzugsweise Schugi-Mix) auf das Polymer mittels einer Zweistoffdüse oder Einstoffdüse aufgebracht, wobei sowohl der Sprühmischer als auch der nachgeschaltete Nachvernetzungstrockner so mit Inertgas (vorzugsweise Stickstoff) gespült werden, dass der Volumenanteil Sauerstoff in diesen Aggregaten weniger als 14 Vol% beträgt, bevorzugt unter 10 Vol% beträgt, am meisten bevorzugt höchstens 8 Vol% beträgt.

In einer weiteren bevorzugten Ausführungsform der Erfindung werden die Komponenten Nachvernetzer (vorzugsweise 2-Oxazolidon und/oder 1,3-Propandiol und/oder 1,2-Propandiol), organisches Lösemittel (vorzugsweise Isopropanol) und ein Teil des insgesamt verwendeten Wassers einerseits als eine Lösung hergestellt, die Komponenten Kalziumphosphat (beispielsweise TCP 130, Fa. Rhodia) und übriges Wasser anderer seits zu einer Dispersion verarbeitet, und die übrigen Komponenten Entstaubungsmittel (vorzugsweise mindestens 7-fach ethoxyliertes Glyzerin, Trimethylolpropan oder Trimethylolethan) und gegebenenfalls noch etwas Tensid (bevorzugt Span® 20) können wahlweise in die Nachvernetzerlösung oder die Dispersion mit eingearbeitet werden, wobei die so hergestellten zwei Lösungen zusammengemischt die gleiche Zusammensetzung aufweisen würden wie in vorstehend beschriebener Ausführungsform. Beide Lösungen werden dann durch separate Düsen gleichzeitig im Sprühmischer auf das Grundpolymer aufgesprüht.

Nach dem erfindungsgemäßen Verfahren werden wasserabsorbierende Polymerpartikel mit einem hohen Weißegrad erhalten.

Gegenstand der vorliegenden Erfindung sind daher auch wasserabsorbierende Polymerpartikel, erhältlich nach dem erfindungsgemäßen Verfahren. Der Weißegrad der wasserabsorbierenden Polymerpartikel wird über den Hunter 60-Wert bestimmt, wobei der Wert vorzugsweise mindestens 60, bevorzugt mindestens 70, besonders bevorzugt mindestens 80, ganz besonders bevorzugt mindestens 85, beträgt.

Weiterhin sind die erfindungsgemäßen wasserabsorbierenden Polymerpartikel weitgehend frei von Verbindungen, die insbesondere während des Gebrauchs, zu unangenehmen Gerüchen führen.

Ein weiterer Gegenstand der vorliegenden Erfindung sind Hygieneartikel, enthaltend erfindungsgemäße wasserabsorbierende Polymerpartikel, vorzugsweise ultradünne Windeln, enthaltend eine absorbierende Schicht bestehend aus 50 bis 100 Gew.-%, vorzugsweise 60 bis 100 Gew.-%, bevorzugt 70 bis 100 Gew.-%, besonders bevorzugt 80 bis 100 Gew.-%, ganz besonders bevorzugt 90 bis 100 Gew.%, erfindungsgemäßer wasserabsorbierender Polymerpartikel, wobei die Umhüllung der absorbierenden Schicht selbstverständlich nicht berücksichtigt ist.

Ganz besonders vorteilhaft sind die erfindungsgemäßen wasserabsorbierenden Polymerpartikel auch zur Herstellung von Laminaten und Kompositstrukturen, wie sie beispielsweise in der US-A 20030181115 sowie der US-A 20040019342 beschrieben sind, geeignet. Zusätzlich zu den in beiden Schriften zur Herstellung solcher neuer absorbierenden Strukturen beschriebenen Schmelzklebern und insbesondere den in der US-A 20030181115 beschriebenen Fasern aus Schmelzklebern, an die die wasserabsorbierenden Polymerpartikel gebunden ist, eignen sich die erfindungsgemäßen wasserabsorbierenden Polymerpartikel auch zur Herstellung von vollkommen analogen Strukturen unter Verwendung von UV-vernetzbaren Schmelzklebern, welche beispielsweise als AC-Resin® (BASF AG, DE) vertrieben werden. Diese UV-vernetzbaren Schmelzkleber haben den Vorteil bereits bei 120 bis 140°C verarbeitbar zu sein, daher sind sie mit vielen thermoplastischen Substraten besser kompatibel. Ein weiterer wesentlicher Vorteil besteht darin, dass UV-vemetzbare Schmelzkleber toxikologisch sehr unbedenklich sind und auch keine Ausdünstungen in den Hygieneartikeln verursachen. Ein ganz wesentlicher Vorteil, im Zusammenhang mit den erfindungsgemäßen wasserabsorbierenden Polymerpartikeln, ist die Eigenschaft der UV-vernetzbaren Schmelzkleber während der Verarbeitung und Vernetzung nicht zur Vergilbung zu neigen. Dies ist insbesondere von Vorteil, wenn ultradünne oder teilweise transparente Hygieneartikel hergestellt werden sollen. Die Kombination der erfindungsgemäßen wasserabsorbierenden Polymerpartikel mit UV-vernetzbaren Schmelzklebern ist daher besonders vorteilhaft. Geeignete UV-vernetzbare Schmelzkleber sind beispielsweise beschrieben in EP-A 377 199, EP-A 445 641, US 5,026,806, EP-A 655 465 und EP-A 377 191.

Zur Bestimmung der Güte der Nachvernetzung werden die getrockneten wasserabsorbierenden Polymerpartikel mit den nachfolgend beschrieben Testmethoden geprüft.

Methoden:

Die Messungen sollten, wenn nicht anders angegeben, bei einer Umgebungstemperatur von 23 ± 2 °C und einer relativen Luftfeuchte von 50 ± 10 % durchgeführt werden. Die wasserabsorbierenden Polymerpartikel werden vor der Messung gut durchmischt.

Zentrifugenretentionskapazität (CRC Centrifuge Retention Capacity)

Die Zentrifugenretentionskapazität wird gemäß der von der EDANA (European Disposables and Nonwovens Association) empfohlenen Testmethode Nr. 441.2-02 "Centrifuge retention capacity" bestimmt.

Absorption unter Druck (AUL Absorbency Under Load)

Die Absorption unter Druck wird gemäß der von der EDANA (European Disposables and Nonwovens Association) empfohlenen Testmethode Nr. 442.2-02 " Absorption under pressure" bestimmt.

Flüssigkeitsweiterleitung (SFC Saline Flow Conductivity)

Die Flüssigkeitsweiterleitung einer gequollenen Gelschicht unter Druckbelastung von 0,3 psi (2070 Pa) wird, wie in EP-A 640 330 beschrieben, als Gel-Layer-Permeability einer gequollenen Gelschicht aus wasserabsorbierenden Polymerpartikeln bestimmt, wobei die in zuvor genannter Patentanmeldung auf Seite 19 und in Figur 8 beschriebene Apparatur dahingehend modifiziert wurde, dass die Glasfritte (40) nicht mehr ver wendet wird, der Stempel (39) aus gleichem Kunststoffmaterial besteht wie der Zylinder (37) und jetzt über die gesamte Auflagefläche gleichmäßig verteilt 21 gleichgroße Bohrungen enthält. Die Vorgehensweise sowie Auswertung der Messung bleibt unverändert gegenüber EP-A 640 330. Der Durchfluss wird automatisch erfasst.

Die Flüssigkeitsweiterleitung (SFC) wird wie folgt berechnet:

$$SFC\ [cm^3 s/g] = (Fg(t=0) x L0)/(d x A x WP),$$

wobei Fg(t=0) der Durchfluss an NaCl-Lösung in g/s ist, der anhand einer linearen Regressionsanalyse der Daten Fg(t) der Durchflussbestimmungen durch Extrapolation gegen t=0 erhalten wird, L0 die Dicke der Gelschicht in cm, d die Dichte der NaCl-Lösung in g/cm$^3$, A die Fläche der Gelschicht in cm$^2$ und WP der hydrostatische Druck über der Gelschicht in dyn/cm$^2$ darstellt.

Extrahierbare 16h

Der Gehalt an extrahierbaren Bestandteilen der wasserabsorbierenden Polymerpartikel wird gemäß der von

der EDANA (European Disposables and Nonwovens Association) empfohlenen Testmethode Nr. 470.2-02 "Determination of extractable polymer content by potentiometric titration" bestimmt.

Feuchtegehalt des Hydrogels

Der Wassergehalt der wasserabsorbierenden Polymerpartikel wird gemäß der von der EDANA (European Disposables and Nonwovens Association) empfohlenen Testmethode Nr. 430.2-02 "Moisture content" bestimmt.

CIE-Farbzahl (L a b)

Die Farbmessung wurde entsprechend dem CIELAB-Verfahren (Hunterlab, Band 8, Jahrgang 1996, Heft 7, Seiten 1 bis 4) durchgeführt. Dabei werden die Farben über die Koordinaten L*, a* und b* eines dreidimensionalen Systems beschrieben. Dabei gibt L* die Helligkeit an, wobei L* = 0 schwarz und L* = 100 weiß bedeutet. Die Werte für a* und b* geben die Position der Farbe auf den Farbachsen rot/grün bzw. gelb/blau an, wobei +a* für rot, -a* für grün, +b* für gelb und -b* für blau steht.

Die Farbmessung entspricht dem Dreibereichsverfahren nach DIN 5033-6.

Der Hunter 60-Wert ist ein Maß für den Weißegrad von Oberflächen und ist definiert als L*-3b*, d.h., der Wert ist umso niedriger, je dunkler und je gelbstichiger eine Farbe ist.

Verwendet wurde ein Hunterlab LS 5100 Colorimeter.

Die EDANA-Testmethoden sind beispielsweise erhältlich bei der European Disposables and Nonwovens Association, Avenue Eugene Plasky 157, B-1030 Brüssel, Belgien.

Beispiele

Beispiel 1

In einem Becherglas wurden 1016,4 g Wasser mit 705,1 g Natronlauge (50 gew.-%ig) gemischt. Unter Rühren und Eiskühlung wurden 634,6 g Acrylsäure (stabilisiert mit 200 Gew.-ppm Hydrochinonmonomethylether) hinzugetropft, wobei die Temperatur durch Eiskühlung unterhalb 35 °C gehalten wurde. Zu dieser Lösung wurden 211,5 g Acrylsäure (stabilisiert mit 200 Gew.-ppm Hydrochinonmonomethylether), in der 5,08 g 15-fach ethoxyliertes Trimethylolpropantriacrylat gelöst sind, hinzugefügt. Diese Reaktionsmischung wurde in einen Lödige-Pflugscharkneter Typ VT 5R-MK (5 l Volumen) überführt und 20 Minuten mittels Durchleiten von Stickstoff inertisiert. Schließlich wurde der Kneter in Betrieb genommen und es wurden noch 2,369 g Natriumpersulfat (gelöst in 13,42 g Wasser), 0,051 g Ascorbinsäure (gelöst in 10,1 g Wasser) und 0,141 g 30 gew.-%iges Wasserstoffperoxid (gelöst in 1,27 g Wasser) der ca. 20°C warmen Lösung rasch hintereinander hinzugefügt. Die Reaktion setzte zügig ein und bei Erreichen einer Innentemperatur von 30°C wurde der Mantel mit 80°C heißem Wärmeträgermedium beheizt, um die Reaktion möglichst adiabat zu Ende zu führen. Nach Erreichen der Maximaltemperatur wurde dann mittels Kühlflüssigkeit (-12°C) das entstandene Gel auf unter 50°C herabgekühlt und dann ausgetragen.

Das Gel wurde auf zwei Bleche mit Drahtboden verteilt und bei 140°C und 250 mbar im Vakuumtrockenschrank getrocknet. Anschließend wurde mit einer Ultrazentrifugalmühle zerkleinert und das Produkt auf eine Korngröße von 150 bis 850 μm abgesiebt.

Das so hergestellte Grundpolymer hatte folgende Eigenschaften:

CRC = 31,3 g/g
AUL 0.3 psi = 18,1 g/g
Extrahierbare 16 h = 6,8 Gew.-%

Farbzahlen:

L* = 85,4
a* = 0,0
b* = 11,4
Hunter 60 = 51,8

Beispiel 2

In einen Lödige-Pflugscharkneter Typ VT 5R-MK (5 l Volumen) wurden 134,9 g Wasser, 211,5 g Acrylsäure (stabilisiert mit 200 Gew.-ppm Hydrochinonmonomethylether), 2221,1 g einer 37,3 gew.-%igen Natriumacrylatlösung

(100 mol-% neutralisiert), die zuvor zwecks Entfernung von Hydrochinonmonomethylether über Aktivkohle filtriert wurde, sowie 5,08 g des Vernetzers 15-fach ethxoyliertes Trimethylolpropantriacrylat vorgelegt und unter Durchperlen von Stickstoff 20 Minuten inertisiert. Der Gehalt an Hydrochinomonomethylether, bezogen auf Acrylsäure, betrug 50 Gew.-ppm. Die Reaktionsmischung wurde dabei von außen so gekühlt, dass die nachfolgende Initiatorzugabe bei ca. 20°C erfolgte. Schließlich wurden in den Kneter unter Rühren noch 2,369 g Natriumpersulfat (gelöst in 13,42 g Wasser), 0,051 g Ascorbinsäure (gelöst in 10,1 g Wasser) und 0,141 g 30 gew.-%iges Wasserstoffperoxid (gelöst in 1,27 g Wasser) rasch hintereinander hinzugefügt. Die Reaktion setzte zügig ein und bei Erreichen einer Innentemperatur von 30°C wurde der Mantel mit 80°C heißem Wärmeträgermedium beheizt, um die Reaktion möglichst adiabat zu Ende zu führen. Nach Erreichen der Maximaltemperatur wurde dann mittels Kühlflüssigkeit (-12°C) das entstandene Gel auf unter 50°C herabgekühlt und dann ausgetragen.

Das Gel wurde auf zwei Bleche mit Drahtboden verteilt und bei 140°C und 250 mbar im Vakuumtrockenschrank getrocknet. Anschließend wurde mit einer Ultrazentrifugalmühle zerkleinert und das Produkt auf eine Korngröße von 150 bis 850 μm abgesiebt.

Das so hergestellte Grundpolymer hatte folgende Eigenschaften:

CRC = 29,1 g/g
AUL 0.3 psi = 25,7 g/g
Extrahierbare 16 h = 3,9 Gew.-%

Farbzahlen:

L* = 87,0
a* = -0,7
b* = 4,2
Hunter 60 = 72,2

Beispiele 3 bis 12

20 g Grundpolymer aus Herstellbeispielen 1 bzw. 2 wurden im Waring-Labormischer auf mittlerer Rührstufe mittels einer Injektionsspritze mit einer Nachvernetzerlösung, bestehend aus 0,02 g 2-Oxazolidinon bzw. Diethanolamin, 0,60 g Wasser und 0,30 g 1,2-Propandiol, besprüht. Das feuchte Polymer wurde mit einem Spatel nochmals homogenisiert und anschließend in einer Petrischale mit einem Innendurchmesser von 18,5 cm gleichmäßig verteilt und in einem Umlufttrockenschrank (Heraeus UT 12; Kendro Laboratory Products GmbH, DE) bzw. Vakuumtrockenschrank (Heraeus VA-CUTHERM VT 6060M; Kendro Laboratory Products GmbH, DE) für 90 Minuten bei 175°C wärmebehandelt. Die nachvernetzten Polymere wurden über ein 850 μm Sieb von Klumpen befreit und charakterisiert. Die Versuchsbedingungen und die Ergebnisse sind in den beiden folgenden Tabellen enthalten.

Tabelle 1: Versuchsbedingungen

| Beispiel | Grundpolymer | Nachvernetzer | Trockner | Gesamtdruck (mbar) | Stickstoffüberdeckung | Sauerstoffpartialdruck |
|---|---|---|---|---|---|---|
| 3 | Beispiel 2 | 2-Oxazolidinon | Umlufttrockenschrank | ca. 1013 | keine | ca. 210 mbar |
| 4 | Beispiel 2 | 2-Oxazolidinon | Vakuumtrockenschrank | 200 | keine | 42 mbar |
| 5 | Beispiel 2 | 2-Oxazolidinon | Vakuumtrockenschrank | 200 | ca. 1.400 l/h | <10 mbar |
| 6 | Beispiel 2 | 2-Oxazolidinon | Vakuumtrockenschrank | ca. 1013 | ca. 1.200 l/h | <10 mbar |
| 7 | Beispiel 2 | Diethanolamin | Umlufttrockenschrank | ca. 1013 | keine | ca. 210 mbar |
| 8 | Beispiel 2 | Diethanolamin | Vakuumtrockenschrank | 170 | keine | 35 mbar |
| 9 | Beispiel 2 | Diethanolamin | Vakuumtrockenschrank | 220 | ca. 1.400 l/h | <10 mbar |
| 10 | Beispiel 1 | 2-Oxazolidinon | Umlufttrockenschrank | ca. 1013 | keine | ca. 210 mbar |
| 11 | Beispiel 1 | 2-Oxazolidinon | Vakuumtrockenschrank | 150 | keine | 31 mbar |
| 12 | Beispiel 1 | 2-Oxazolidinon | Vakuumtrockenschrank | 230 mbar | ca. 1.400 l/h | <10 mbar |

Tabelle 2: Versuchsergebnisse

| Beispiel | CRC [g/g] | AUL0.7psi [g/g] | SFC [$10^{-7}cm^3s/g$] | L* | a* | b* | Hunter 60 |
|---|---|---|---|---|---|---|---|
| 3 | 25,0 | 23,1 | 133 | 86,7 | -0,7 | 9,4 | 58,5 |
| 4 | 24,3 | 22,2 | 155 | 86,8 | -1,1 | 7,0 | 65,9 |
| 5 | 23,9 | 21,4 | 166 | 86,8 | -0,9 | 4,5 | 73,5 |
| 6 | 25,2 | 23,4 | 130 | 86,9 | -0,8 | 4,5 | 73,4 |
| 7 | 24,2 | 22,9 | n.b. | 87,2 | -1,0 | 7,1 | 66,0 |
| 8 | 24,1 | 22,3 | n.b. | 87,7 | -0,9 | 4,9 | 73,0 |
| 9 | 23,6 | 21,9 | n.b. | 86,8 | -0,9 | 4,4 | 73,6 |
| 10 | 25,7 | 21,7 | 107 | 83,5 | 0,0 | 14,0 | 41,6 |
| 11 | 25,1 | 21,2 | 95 | 83,6 | -0,2 | 11,3 | 49,7 |
| 12 | 26,2 | 21,3 | 74 | 84,9 | -0,1 | 11,2 | 51,2 |

Man erkennt, dass bei Trocknung im Vakuum oder unter Stickstoff deutlich weißere Polymerpartikel erhalten wurden als unter Umgebungsluft. Besonders günstig verhalten sich dabei Polymere, die aus nur wenig stabilisierter Acrylsäure hergestellt wurden.

## Patentansprüche

1. Verfahren zur Nachvernetzung wasserabsorbierender Polymerpartikel, **dadurch gekennzeichnet, dass** zur Herstellung des Grundpolymers eine Acrylsäure eingesetzt wird, die bis 0,013 Gew.-% eines Halbethers eines Hydrochinons enthält, und der Gesamtpartialdruck eines oder mehrerer oxidierender Gase in der die wasserabsorbierenden Polymerpartikel überlagernden Atmosphäre während Trocknung und Nachvernetzungsreaktion weniger als 140 mbar beträgt.

2. Verfahren gemäß Anspruch 1, **dadurch gekennzeichnet, dass** das oxidierende Gas Sauerstoff ist.

3. Verfahren gemäß Anspruch 1 oder 2, **dadurch gekennzeichnet, dass** die Nachvernetzung bei einem Gesamtdruck von weniger als 670 mbar durchgeführt wird.

4. Verfahren gemäß einem der Ansprüche 1 bis 3, **dadurch gekennzeichnet, dass** der Nachvernetzer zusammen mit mindestens einem Cosolvens als wässrige Lösung eingesetzt wird, wobei der Siedepunkt des Cosolvens höchstens 160°C oder mindestens 200°C beträgt.

5. Verfahren gemäß einem der Ansprüche 1 bis 3, **dadurch gekennzeichnet, dass** der mindestens eine Nachvernetzer als wässrige Lösung in Abwesenheit eines Cosolvens eingesetzt wird.

6. Verfahren gemäß einem der Ansprüche 1 bis 5, **dadurch gekennzeichnet, dass** der mindestens eine Nachvernetzer ein Amidacetal, ein offenkettiger oder zyklischer Carbaminsäureester, ein zyklischer Kohlensäureester, ein Bisoxazolin und/oder ein mehrwertiger Alkohol ist, wobei der mehrwertige Alkohol ein Molekulargewicht von weniger als 100 g/mol pro Hydroxylgruppe sowie keine vincinalen, geminalen, sekundären oder tertiären Hydroxylgruppen aufweist.

7. Verfahren gemäß einem der Ansprüche 1 bis 6, **dadurch gekennzeichnet, dass** die Nachvernetzung bei einer Temperatur von 150 bis 210°C durchgeführt wird.

8. Verfahren gemäß einem der Ansprüche 1 bis 7, **dadurch gekennzeichnet, dass** zur Herstellung des Grundpolymers eine Acrylsäure eingesetzt wird, die höchstens 70 Gew.-ppm eines Halbethers eines Hydrochinons enthält.

## Claims

1. A process for postcrosslinking water-absorbing polymeric particles, wherein the base polymer is prepared using an acrylic acid comprising up to 0.013% by weight of a half ether of a hydroquinone and the total partial pressure of one or more oxidizing gases in the atmosphere overlying the water-absorbing polymeric particles is less than 140 mbar during drying and postcrosslinking.

2. The process according to claim 1 wherein the oxidizing gas is oxygen.

3. The process according to claim 1 or 2 wherein the postcrosslinking is carried out at a total pressure of less than 670 mbar.

4. The process according to any one of claims 1 to 3 wherein the postcrosslinker is used together with at least one cosolvent as an aqueous solution, the boiling point of the cosolvent being not more than 160°C or not less than 200°C.

5. The process according to any one of claims 1 to 3 wherein the at least one postcrosslinker is used as an aqueous solution in the absence of a cosolvent.

6. The process according to any one of claims 1 to 5 wherein the at least one postcrosslinker is an amide acetal, an open-chain or cyclic carbamic ester, a cyclic carbonic ester, a bisoxazoline and/or a polyhydric alcohol, the polyhydric alcohol having a molecular weight of less than 100 g/mol per hydroxyl group and also no vicinal, geminal, secondary or tertiary hydroxyl groups.

7. The process according to any one of claims 1 to 6 wherein the postcrosslinking is carried out at a temperature in the range from 150 to 210°C.

8. The process according to any one of claims 1 to 7 wherein the base polymer is prepared using an acrylic acid comprising not more than 70 weight ppm of a half ether of a hydroquinone.

## Revendications

1. Procédé de post-réticulation de particules polymères absorbant l’eau, **caractérisé en ce que**, pour la fabrication du polymère de base, on utilise un acide acrylique qui contient jusqu’à 0,013 % en poids d’un semi-éther d’une hydroquinone, et que la pression partielle d’un ou plusieurs gaz oxydants, dans l’atmosphère située au-dessus des particules polymères absorbant l’eau, est, pendant le séchage et la réaction de post-réticulation, inférieure à 140 mbar.

2. Procédé selon la revendication 1, **caractérisé en ce que** le gaz oxydant est l’oxygène.

3. Procédé selon la revendication 1 ou 2, **caractérisé en ce que** la post-réticulation est mise en oeuvre sous une pression totale inférieure à 670 mbar.

4. Procédé selon l’une des revendications 1 à 3, **caractérisé en ce que** l’agent de post-réticulation est utilisé en même temps qu’au moins un co-solvant sous forme d’une solution aqueuse, le point d’ébullition du solvant étant d’au plus 160°C ou d’au moins 200°C.

5. Procédé selon l’une des revendications 1 à 3, **caractérisé en ce que** le ou les agents de post-réticulation sont utilisés sous forme d’une solution aqueuse en l’absence de co-solvant.

6. Procédé selon l’une des revendications 1 à 5, **caractérisé en ce que** le ou les agents de post-réticulation sont des amide-acétals, des esters de l’acide carbamique cycliques ou à chaîne ouverte, des esters cycliques de l’acide carbonique, des bisoxazolines et/ou des polyalcools, les polyalcools ayant une masse moléculaire inférieure à 100 g/mol par groupe hydroxyle, et ne comportant aucun groupe vicinal, géminal, secondaire ou tertiaire.

7. Procédé selon l’une des revendications 1 à 6, **caractérisé en ce que** la post-réticulation est mise en oeuvre à une température de 150 à 210°C.

8. Procédé selon l'une des revendications 1 à 7, **caractérisé en ce qu'**on utilise pour la préparation du polymère de base un acide acrylique qui contient au plus 70 ppm en poids d'un semi-éther d'une hydroquinone.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 530438 A
- EP 547847 A
- EP 559476 A
- EP 632068 A
- WO 9321237 A
- WO 03104299 A
- WO 03104300 A
- WO 03104301 A
- DE 10331450
- DE 10331456
- DE 10355401
- DE 19543368 A
- DE 19646484 A
- WO 9015830 A
- WO 0232962 A
- EP 343427 A
- DE 10319462
- DE 19941423 A
- EP 686650 A
- WO 0145758 A
- WO 0138402 A
- EP 955086 A
- EP 083022 A
- EP 543303 A
- EP 937736 A
- DE 3314019 C
- DE 3523617 C
- EP 450922 A
- DE 10204938 A
- US 6239230 B
- EP 1199327 A
- DE 4020780 A
- DE 198075022 A
- DE 19807992 A
- DE 198545732 A
- DE 19854574 A
- DE 10204937 A
- DE 10334584
- WO 03031482 A
- EP 534228 A
- EP 1191051 A
- US 20030181115 A
- US 20040019342 A
- EP 377199 A
- EP 445641 A
- US 5026806 A
- EP 655465 A
- EP 377191 A
- EP 640330 A


### In der Beschreibung aufgeführte Nicht-Patentliteratur


- **F.L. BUCHHOLZ ; A.T. GRAHAM.** Modern Superabsorbent Polymer Technology. Wiley-VCH, 1998, 97-103
- Modern Superabsorbent Polymer Technology. **F.L. BUCHHOLZ ; A.T. GRAHAM.** Ullmann's Encyclopedia of Industrial Chemistry. Wiley-VCH, 1998, vol. 35, 73-103
- **THOMAS RICHTER.** Reihe Kontakt & Studium. Expert-Verlag, 2004, vol. 660
- **GÜNTER WOZNIAK.** VDI-Reihe. Springer-Verlag, 2002
- **JAHRGANG.** *Hunterlab,* 1996, vol. 8, 1-4